# FASCICULE DE BREVET EUROPEEN

(11) **EP 2 423 857 B1**
(45) Date de publication et mention de la délivrance du brevet: **25.05.2016**
(21) Numéro de dépôt: 11178152.2
(22) Date de dépôt: 19.08.2011
(51) Int. Cl.: G06K 19/077

(54) **Carte à microcircuit comprenant une mini-carte**
Mikrochipkarte, die eine Minikarte umfasst
Microcircuit card including a mini-card

(30) Priorité: 24.08.2010 FR 1056718
(43) Date de publication de la demande: 29.02.2012
(73) Titulaire: Oberthur Technologies, 92300 Levallois-Perret (FR)
(72) Inventeur: Bosquet, Olivier, 35500 Vitre (FR); Boschet, Jean-François, 35440 Montreuil sur Ille (FR)
(74) Mandataire: Delumeau, François Guy

(56) Documents cités:
- DE-A1- 19 921 525
- FR-A1- 2 783 948
- US-A- 5 888 624

## Description

La présente invention concerne le domaine technique des cartes à microcircuits également désignées par cartes à puce.

Elle s'applique plus particulièrement mais non exclusivement aux cartes à puce dites « bi-standard ».

Une telle carte « bi-standard » comprend un corps en forme générale de plaque délimitant les dimensions extérieures de la carte à puce conformes à un premier format dit grand, par exemple le format ID-1 défini par la norme ISO 7816.

Généralement, le corps de carte comprend également une portion interne délimitée par une ligne de prédécoupe, comprenant le microcircuit et formant une plaquette détachable ou mini-carte. La portion interne délimite les dimensions extérieures de la mini-carte conformes à un deuxième format dit petit, par exemple les normes GSM 11.11 / ISO 7810.

L'utilisateur peut alors au choix utiliser la carte selon l'un ou l'autre des deux formats. En effet, pour utiliser le petit format, l'utilisateur détache la mini-carte par exemple par simple pression d'un doigt sur la portion interne prédécoupée ou éventuellement au moyen d'un outil classique.

Le procédé de fabrication d'une carte bi-standard consiste à reproduire toutes les étapes de fabrication d'une carte standard et à réaliser une étape supplémentaire de prédécoupe partielle de la mini-carte.

Il existe actuellement un besoin de réaliser des cartes, notamment des cartes de type « bi-standard », en papier ou en carton. En effet, un tel matériau présente de nombreux avantages : d'une part, il est recyclable voire même biodégradable et son coût est généralement inférieur au coût des plastiques conventionnels que sont le PVC ou le PVC ABS, classiquement utilisés dans le domaine.

La prédécoupe doit permettre un détachement net de la mini-carte du corps de carte tout en étant suffisamment solide pour éviter son détachement intempestif.

Or, la réalisation d'une telle prédécoupe s'avère être relativement délicate dans un matériau tel que du papier ou du carton.

En effet, la séparation de la mini-carte et du corps, au lieu de produire une rupture franche et nette, produit parfois un délaminage du support, une déchirure irrégulière, des bavures, etc. En outre, du fait de l'apparition de ces défauts, certaines contraintes de la norme ISO 7816 peuvent ne plus être respectées ce qui peut nuire au fonctionnement de la carte.

US5888624 divulgue une carte à module électronique en matériau fibreux.

FR2783948 divulgue une mini-carte à détacher d'un corps de carte, par rupture d'une bretelle.

L'invention propose une carte en matériau fibreux comprenant une mini-carte facilement détachable.

A cet effet, l'invention a pour objet une carte à microcircuit telle que définie dans la revendication 1.

La présence de la couche en matériau adhésif permet d'assurer un maintien mécanique de la carte ainsi qu'un détachement franc et net de la mini-carte. A la différence d'une carte formée exclusivement avec du matériau fibreux, une telle carte a une très bonne élasticité et la couche de jonction en matériau adhésif permet d'assurer un bon maintien de l'attache tout en permettant un détachement facile et sans bavures.

Une carte selon l'invention peut en outre comporter l'une ou plusieurs des caractéristiques définies dans les revendications dépendantes 2 à 13.

D'autres caractéristiques et avantages de l'invention apparaîtront à la lumière de la description qui suit, faite en référence aux dessins annexés dans lesquels :
- la figure 1 représente une vue en perspective d'une carte à microcircuit selon l'invention ;
- la figure 2 est une vue en coupe selon la ligne II-II de la carte de la figure 1 selon un premier mode de réalisation de l'invention ;
- la figure 3 est une vue en coupe selon la ligne II-II de la carte de la figure 1 selon un deuxième mode de réalisation de l'invention.

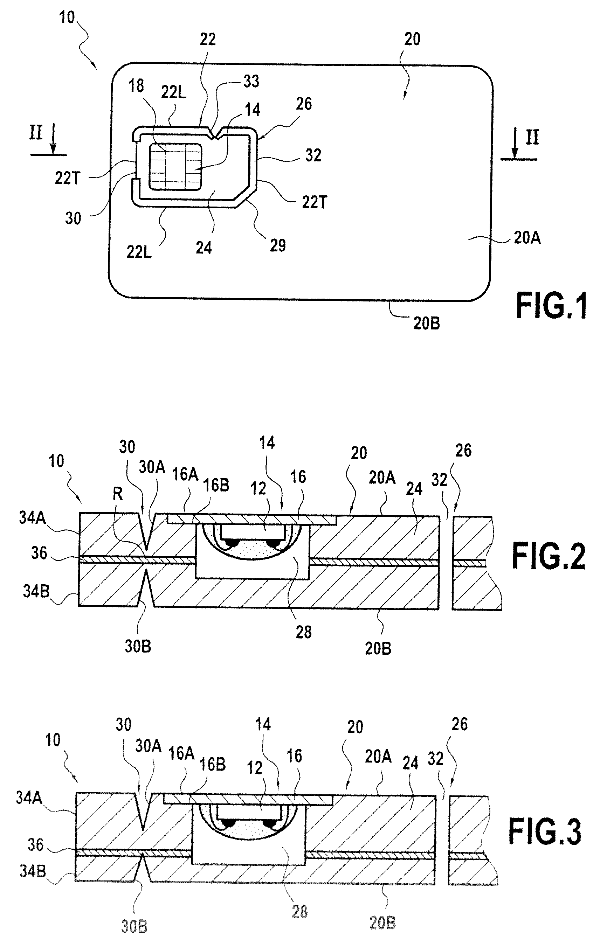

On a représenté sur **la** **figure 1** une carte selon l'invention. Cette carte est désignée par la référence générale 10.

Dans ce mode de réalisation, la carte est une carte à microcircuit. Ainsi, la carte 10 comprend un microcircuit 12 apte à traiter des données. Dans l'exemple décrit, le microcircuit 12 est incorporé dans un module 14.

Le module 14 comprend par exemple un support 16 délimitant des première 16A et deuxième 16B faces opposées. De préférence, l'une des faces, par exemple, la deuxième face 16B du support 16 porte le microcircuit 12 alors que l'autre des faces 16A porte une interface 18 de plage de contacts externes apte à venir en contact avec un lecteur de carte externe pour échanger des données avec le microcircuit 12.

Cette interface 18 comprend par exemple une série de plages métalliques de contacts électriques conformes à une norme prédéfinie de carte à microcircuit. Par exemple, les plages de contact sont conformes à la norme ISO 7816. Dans ce mode de réalisation, les plages de contact de l'interface correspondent aux contacts C1 à C7 de la norme ISO 7816.

Dans une variante non illustrée sur les figures, le module 14 peut comprendre également une antenne de communication en champ proche raccordée au microcircuit 12. Dans ce cas, le module 14 peut être dépourvu de l'interface externe de contacts, le microcircuit étant apte à échanger des données par communication en champ proche.

La carte 10 comprend un corps 20 en forme générale de carte délimitant des première 20A et deuxième 20B faces opposées.

Dans ce mode de réalisation, le corps 20 délimite les dimensions extérieures de la carte 10. Dans cet exemple et de préférence, les dimensions de la carte 10 sont définies par un premier format, dit "grand format", par exemple le format ID-1 de la norme ISO 7816 qui est le format classiquement utilisé pour les cartes bancaires. Le format ID-1 définit des dimensions de 86 millimètres par 54 millimètres et une épaisseur inférieure au millimètre, par exemple égale à 800 micromètres. Bien entendu, d'autres formats de cartes peuvent également être utilisés.

Plus particulièrement, la carte 10 forme un support en forme de plaque pour une mini-carte 22. Ainsi, comme cela est visible sur **la** **figure 1****,** la carte 10 comprend une portion interne 24 délimitée par une ligne interne 26 de contour à l'intérieur du corps 20. De préférence, cette portion interne 24 a un deuxième format, dit petit format, conforme à la norme GSM 11.11.

Dans ce mode de réalisation, la portion interne 24 comprend le microcircuit 12 et de préférence comprend le module 14. A cet effet, la portion interne 24 comprend une cavité 28 de réception du module 14.

Comme cela est illustré sur **la** **figure 2 ou 3****,** la cavité 28 comprend une zone centrale profonde de logement du microcircuit 12 et une zone périphérique entourant la zone centrale profonde délimitant un gradin avec la zone centrale profonde et formant une surface d'appui du support 16.

Dans l'exemple illustré sur les figures, la mini-carte 22 présente deux bords longitudinaux 22L et deux bords transversaux 22T. Par ailleurs, de préférence, la ligne de contour 26 présente un profil à détrompeur comprenant un pan coupé 29 agencé à l'un des coins de la mini-carte 22.

Afin que l'utilisateur puisse utiliser la carte 10 selon l'un ou l'autre des deux formats, la mini-carte 22 est détachable du corps 20. De préférence, pour détacher la mini-carte 22, l'utilisateur exerce une pression manuelle sur la mini-carte de manière à ce que l'attache cède.

Conformément à l'invention, la mini-carte 22 est reliée au corps 20 par au moins une attache 30 frangible formée par une région R d'épaisseur amincie du corps 20.

Comme cela est visible sur **la** **figure 1****,** la ligne de contour 26 est formée par une fente de contour 32 interrompue au moins par l'attache 30. De préférence, l'attache 30 s'étend le long d'un bord transversal 22T de la mini-carte 22. En outre, dans l'exemple illustré, la fente 32 est interrompue également au moins en un autre point d'attache 33 positionné sur un des bords longitudinaux 22T de la mini-carte 22. Le point d'attache 33 est par exemple celui qui est décrit en détail dans le brevet européen n° EP 1405260.

Comme on peut le voir plus particulièrement en coupe sur **la** **figure 2 ou 3****,** la fente 32 correspond à une découpe complète du corps 20 de la carte 10 dans le sens de son épaisseur.

Conformément à l'invention, le corps 20 comprend au moins deux couches 34A, 34B réalisées dans un matériau fibreux et au moins une couche de jonction 36 des deux couches 34A, 34B entre elles réalisées dans un matériau adhésif. Par exemple, les couches 34A, 34B sont réalisées dans un matériau fibreux comprenant des fibres synthétiques et/ou naturelles. Par ailleurs, le matériau adhésif de la couche 36 comprend essentiellement une résine à base d'amidon.

La présence de la couche de jonction 36 confère à la carte 10 une élasticité ainsi qu'un maintien mécanique de la carte 10. En outre, la présence de la couche de jonction 36 dans la région amincie R permet de réaliser une rupture de l'attache 30 franche et sans bavure avec facilité. De préférence, la région d'épaisseur amincie R comprend au moins la moitié de l'épaisseur de la couche de jonction 36.

En outre, grâce à cette couche de jonction 36, la mini-carte 22 présente une relativement bonne résistance aux déformations.

Afin d'obtenir un résultat optimal en termes de détachement de la mini-carte 22, la couche de jonction 36 a une épaisseur supérieure ou égale à dix micromètres. De préférence, la région amincie R comprend au plus 50 micromètres de l'épaisseur de chaque couche fibreuse 34A, 34B.

De préférence, pour former la région amincie R, une ou plusieurs entailles sont pratiquées dans le corps de la carte 10 le long de la ligne de contour 26 de la mini-carte 22.

Ainsi, pour réaliser l'attache 30, on a formé des entailles de prédécoupe de manière à former la région amincie R frangible de prédécoupe.

Dans cet exemple, les entailles présentent un profil en V ou éventuellement un profil en U et sont agencées en regard l'une de l'autre dans le sens de l'épaisseur de manière à ne laisser qu'une région d'épaisseur amincie R selon la direction de l'épaisseur de la carte 10.

De préférence, l'attache 30 est formée par au moins une incision 30A ou 30B non traversante réalisée dans l'épaisseur du corps 20. L'incision 30A ou 30B traverse au moins partiellement l'une des deux couches fibreuses 34A ou 34B.

Dans l'exemple décrit, comme cela est illustré en exemple sur **la** **figure 2 ou 3****,** l'attache 30 est formée par au moins deux incisions 30A, 30B non traversantes en vis-à-vis l'une de l'autre qui s'étendent respectivement à partir des faces opposées 20A, 20B du corps 20 de carte 10.

La couche de jonction 36 est positionnée de préférence au centre de l'épaisseur du corps 20 de carte 10 ce qui permet d'optimiser les propriétés mécaniques du corps 20 de la carte 10 du fait de la symétrie des couches. Par exemple, chaque incision 30A, 30B s'étend sur un tiers de l'épaisseur du corps.

Dans la variante illustrée sur **la** **figure 3****,** la couche de jonction 36 peut être décentrée dans l'épaisseur du corps 20 de carte. Par exemple, la couche de jonction 36 est séparée de la face proximale 20B de la carte 10, c'est-à-dire la face du corps la plus proche de la couche de jonction 36 selon la direction verticale à la carte (par opposition à la face distale 20A plus éloignée de la couche de jonction 36), par une distance comprise entre 150 et 450 micromètres.

Dans ce cas, les incisions 30A, 30B ont des profondeurs asymétriques.

En outre, afin de préserver les propriétés mécaniques du support, au niveau de l'attache 30, les incisions 30A et 30B s'étendent ensemble sur moins de la moitié de l'épaisseur de la couche de jonction 36.

Par exemple, les incisions 30A, 30B représentent 80% de l'épaisseur totale du corps 20 et 20% de l'épaisseur du corps 20 restant comprennent au moins la moitié de l'épaisseur de la couche de jonction 36.

Ainsi, la mini-carte 22 une fois détachée, présente des bords nets et réguliers. Les entailles constituent un exemple préféré de formation de la région amincie. Bien entendu, d'autres techniques peuvent être utilisées pour former la région R.

## Revendications

1. Carte (10) à microcircuit (12) comprenant un corps (20) de carte et une mini-carte (22) détachable de ce corps (20), la dite mini-carte (22) portant le microcircuit (12) est reliée au corps (20) par au moins une attache (30) frangible formée par une région d'épaisseur amincie (R) du corps (20), le corps (20) comprend au moins deux couches réalisées dans un matériau fibreux et au moins une couche (36) de jonction des deux couches (34A, 34B) entre elles réalisée dans un matériau adhésif, la carte étant **caractérisée en ce que** la région d'épaisseur amincie (R), s'étend au moins partiellement dans l'épaisseur de la couche de jonction (36).

2. Carte (10) selon la revendication précédente, dans laquelle l'attache (30) est formée par au moins une incision non traversante (30A, 30B) réalisée dans l'épaisseur du corps (20).

3. Carte (10) selon la revendication précédente, dans laquelle l'incision (30A, 30B) traverse au moins partiellement l'une des deux couches (34A, 34B).

4. Carte (10) selon la revendication 2 ou 3, dans laquelle l'attache (30) est formée par au moins deux incisions non traversantes (30A, 30B) en vis-à-vis l'une de l'autre qui s'étendent à partir de faces opposées (20A, 20B) du corps (20) de la carte (10).

5. Carte (10) selon l'une quelconque des revendications précédentes, dans laquelle la région d'épaisseur amincie (R) comprend au moins la moitié de l'épaisseur de la couche de jonction (36).

6. Carte (10) selon l'une quelconque des revendications précédentes, dans laquelle la couche de jonction (36) a une épaisseur supérieure ou égale à dix micromètres.

7. Carte (10) selon l'une ou l'autre des revendications précédentes, dans laquelle la région amincie (R) comprend au plus 50 micromètres de l'épaisseur de chaque couche fibreuse (34A, 34B).

8. Carte (10) selon l'une quelconque des revendications précédentes, dans laquelle le matériau adhésif comprend essentiellement une résine à base d'amidon.

9. Carte (10) selon l'une quelconque des revendications précédentes, dans laquelle le matériau fibreux comprend des fibres synthétiques et/ou naturelles.

10. Carte (10) selon l'une quelconque des revendications précédentes, dans laquelle la mini-carte (22) est reliée au corps (20) par un autre point d'attache.

11. Carte (10) selon l'une quelconque des revendications, dans laquelle le corps délimite les dimensions extérieures de la carte (10) au format ID-1 de la norme ISO 7816.

12. Carte (10) selon l'une quelconque des revendications précédentes, dans laquelle la mini-carte (22) détachable est au format GSM 11. 11.

13. Carte selon l'une quelconque des revendications précédentes, dans laquelle la mini-carte (22) est délimitée par deux bords transversaux (22T) et deux bords longitudinaux (22L), l'attache (30) s'étend sur au moins un des bords transversaux (22T).

## Patentansprüche

1. Karte (10) mit Mikroschaltung (12), umfassend einen Kartenkörper (20) und eine Minikarte (22), die von diesem Körper (20) lösbar ist, wobei die Minikarte (22), die die Mikroschaltung (12) trägt, mit dem Körper (20) durch mindestens eine zerbrechbare Befestigung (30), die von einem Bereich mit geringerer Dicke (R) des Körpers (20) gebildet ist, verbunden ist, wobei der Körper (20) mindestens zwei Schichten, die aus einem faserigen Material hergestellt sind, und mindestens eine Verbindungsschicht (36) der beiden Schichten (34A, 34B) miteinander, die aus einem Haftmaterial hergestellt ist, umfasst, wobei die Karte **dadurch gekennzeichnet ist, dass** sich der Bereich von geringerer Dicke (R) zumindest teilweise in der Dicke der Verbindungsschicht (36) erstreckt.

2. Karte (10) nach dem vorhergehenden Anspruch, bei der die Befestigung (30) von mindestens einem nicht durchgehenden Einschnitt (30A, 30B), die in der Dicke des Körpers (20) verwirklicht ist, gebildet ist.

3. Karte (10) nach dem vorhergehenden Anspruch, bei der der Einschnitt (30A, 30B) zumindest eine der beiden Schichten (34A, 34B) durchquert.

4. Karte (10) nach Anspruch 2 oder 3, bei der die Befestigung (30) von mindestens nicht durchgehenden Einschnitten (30A, 30B) gebildet ist, die einander gegenüberliegen und sich von gegenüberliegenden Seiten (20A, 20B) des Körpers (20) der Karte (10) aus erstrecken.

5. Karte (10) nach einem der vorhergehenden Ansprüche, bei der der Bereich von geringerer Dicke (R) mindestens die Hälfte der Dicke der Verbindungsschicht (36) umfasst.

6. Karte (10) nach einem der vorhergehenden Ansprüche, bei der die Verbindungsschicht (36) eine Dicke größer oder gleich zehn Mikrometer hat.

7. Karte (10) nach dem einen oder dem anderen der vorhergehenden Ansprüche, bei der der dünnere Bereich (R) höchstens 50 Mikrometer der Dicke jeder Faserschicht (34A, 34B) umfasst.

8. Karte (10) nach einem der vorhergehenden Ansprüche, bei der das Haftmaterial im Wesentlichen ein Harz auf Stärkebasis umfasst.

9. Karte (10) nach einem der vorhergehenden Ansprüche, bei der das faserige Material synthetische und/oder natürliche Fasern umfasst.

10. Karte (10) nach einem der vorhergehenden Ansprüche, bei der die Minikarte (22) mit dem Körper (20) durch einen weiteren Befestigungspunkt verbunden ist.

11. Karte (10) nach einem der Ansprüche, bei der der Körper die Außenabmessungen der Karte (10) im Format ID-1 der Norm ISO 7816 begrenzt.

12. Karte (10) nach einem der vorhergehenden Ansprüche, bei der die lösbare Minikarte (22) im Format GSM 11.11 ist.

13. Karte nach einem der vorhergehenden Ansprüche, bei der die Minikarte (22) durch zwei Querränder (22T) und zwei Längsränder (22L) begrenzt ist, wobei sich die Befestigung (30) auf mindestens einem der Querränder (22T) erstreckt.

## Claims

1. A card (10) with a microcircuit (12) comprising a card body (20) and a minicard (22) detachable from this body (20), said minicard (22) bearing the microcircuit (12) is connected to the body (20) through at least one frangible attachment (30) formed by a region with a thinned thickness (R) of the body (20), the body (20) comprises at least two layers made in a fibrous material and at least one junction layer (36) of both layers (34A, 34B) together made in an adhesive material, the card being **characterized in that** the region with thinned thickness (R) at least partly extends into the thickness of the junction layer (36).

2. The card (10) according to the preceding claim, wherein the attachment (30) is formed by at least one non-through-cut (30A, 30B) made in the thickness of the body (20).

3. The card (10) according to the preceding claim, wherein the cut (30A, 30B) at least partly crosses one of the two layers (34A, 34B).

4. The card (10) according to claim 2 or 3, wherein the attachment (30) is formed with at least two non-through-cuts (30A, 30B) facing each other which extend from opposite faces (20A, 20B) of the body (20) of the card (10).

5. The card (10) according to any of the preceding claims, wherein the region with a thinned thickness (R) comprises at least half of the thickness of the junction layer (36).

6. The card (10) according to any of the preceding claims, wherein the junction layer (36) has a thickness greater than or equal to ten micrometers.

7. The card (10) according to either one of the preceding claims, wherein the thinned region (R) comprises at most 50 micrometers of the thickness of each fiber layer (34A, 34B).

8. The card (10) according to any of the preceding claims, wherein the adhesive material essentially comprises a starch-based resin.

9. The card (10) according to any of the preceding claims, wherein the fiber material comprises synthetic or natural fibers.

10. The card (10) according to any of the preceding claims, wherein the minicard (22) is connected to the body (20) through another attachment point.

11. The card (10) according to any of the claims, wherein the body delimits the outer dimensions of the card in the ID-1 format of the ISO 7816 standard.

12. The card (10) according to any of the preceding claims, wherein the detachable minicard (22) is in the GSM 11,11 format.

13. The card according to any of the preceding claims, wherein the minicard (22) is delimited by two transverse edges (22T) and two longitudinal edged (22L), the attachment (30) extends over at least one of the transverse edges (22T).
